# FASCICULE DE BREVET EUROPEEN

(11) **EP 3 395 090 B1**
(45) Date de publication et mention de la délivrance du brevet: **13.05.2020**
(21) Numéro de dépôt: 16826412.5
(22) Date de dépôt: 20.12.2016
(51) Int. Cl.: H04W 8/18, H04W 8/20, H04W 88/06

(54) **PROCEDE DE CONTROLE D'UN MODULE D'IDENTITE DE SOUSCRIPTEUR EMBARQUE**
VERFAHREN ZUR STEUERUNG EINES EINGEBETTETEN TEILNEHMERIDENTITÄTSMODULS
METHOD FOR CONTROLLING AN EMBEDDED SUBSCRIBER IDENTITY MODULE

(30) Priorité: 22.12.2015 FR 1563135
(43) Date de publication de la demande: 31.10.2018
(73) Titulaire: IDEMIA France, 92700 Colombes (FR)
(72) Inventeur: JOLIBOIS, Romuald, 92700 Colombes (FR); DUMOULIN, Jérôme, 92700 Colombes (FR); WOZNIAK, Tomasz, 92700 Colombes (FR)
(74) Mandataire: Cabinet Beau de Loménie
(86) Numéro de dépôt international: PCT/FR2016/053576
(87) Numéro de publication internationale: WO 2017/109384

(56) Documents cités:
- EP-A1- 2 773 077
- EP-A1- 2 884 712
- US-A1- 2015 350 878

## Description

### Arrière-plan de l'invention

La présente invention porte sur le domaine des modules d'identité de souscripteur embarqués appelés aussi modules eUICC (pour « *embedded Universal Integrated Circuit Chip* »), et concerne plus particulièrement de tels modules eUICC aptes à gérer de façon appropriée une pluralité de profils de communication.

De façon connue, une carte SIM conventionnelle est configurée pour permettre à un terminal de communication (tel qu'un téléphone portable par exemple), avec lequel elle coopère, d'utiliser le réseau de communication d'un seul opérateur de téléphonie. Pour ce faire, la carte SIM comprend des données de souscription comme par exemple un identifiant IMSI (pour « *International Mobile Subscriber Identity*»), des clés cryptographiques et des algorithmes propres à l'opérateur associé. Ces données de souscription sont stockées de façon permanente dans une mémoire morte.

Lorsqu'un téléphone portable tente d'utiliser les services d'un réseau cellulaire, il envoie toutes les données de souscription, stockées dans la carte SIM, nécessaires à l'opérateur du réseau pour obtenir l'accès aux services requis. L'opérateur peut ainsi authentifier l'utilisateur et vérifier à l'aide d'une base de données HLR (pour « *Home Location Register*») que celui-ci a bien souscrit au service demandé. Dans l'affirmative, l'opérateur autorise alors l'accès au téléphone portable embarquant la carte SIM dont les données ont été utilisées pour l'authentification et l'enregistrement auprès du réseau de l'opérateur.

Par ailleurs, on connaît aujourd'hui les cartes SIM reprogrammables, et plus particulièrement les modules d'identité de souscripteur embarqués ou module eUICC. Ces modules reprogrammables permettent à un utilisateur de changer d'opérateur sans avoir à remplacer physiquement la carte SIM dans le téléphone portable. Les principales spécifications d'un module eUICC sont définies par le groupe GSMA (pour « *Global System for Mobile Communications Association* ») dans le standard GSMA SGP.02 v3.0 intitulé « Remote Provisioning Architecture for Embedded UICC - Technical Spécification - Version 3.0 » datant du 30 juin 2015. Un module eUICC est un élément matériel sécurisé, généralement de petite taille, pouvant être intégré dans un terminal mobile afin de mettre en œuvre les fonctions d'une carte SIM traditionnelle.

En particulier, un module eUICC est apte à contenir plusieurs profils de communication (appelés aussi par la suite « profils »). Chaque profil est contenu dans un domaine sécurisé dédié nommé ISD-P conformément audit standard GSMA. Lorsqu'un profil de communication est actif, il permet au téléphone portable d'accéder de façon sécurisée au réseau de communication d'un opérateur associé, ainsi qu'aux services définis par le profil en question. En changeant le profil de communication actif dans le module eUICC, il est possible de changer d'opérateur ou de modifier l'accès à des services associés (services voix et/ou de données par exemple).

Cependant, lorsqu'un module eUICC comprend plusieurs profils de communication, il est nécessaire de désactiver un profil lorsque l'on souhaite en activer un autre. Pour ce faire, le serveur SM-SR en charge du cycle de vie des profils chargés au sein d'un module eUICC envoie des requêtes via le réseau cellulaire pour, par exemple, activer ou désactiver le profil en question dans le module eUICC.

L'envoi de ces requêtes d'activation et de désactivation, via le réseau cellulaire, engendre cependant du trafic de données dans le réseau et sollicite des ressources réseau, ce qui n'est pas toujours souhaitable. De manière plus générale, il n'est pas toujours souhaitable de faire intervenir un opérateur pour activer ou désactiver un profil dans un terminal de communication.

Il existe aujourd'hui un besoin pour améliorer la gestion de l'état d'un profil de communication dans un module eUICC coopérant avec un terminal de communication.

EP2773077 A1, US2015350878 A1 et EP2884712 A1 fournissent des enseignements liés au contexte de la présente demande et des revendications qui définissent l'invention.

### Objet et résumé de l'invention

L'invention est définie par les revendications.

A cet effet, un mode de réalisation concerne un module d'identité de souscripteur embarqué (aussi appelé eUICC) apte à coopérer avec un terminal de communication, dans lequel le module eUICC est apte à maintenir simultanément à l'état actif une pluralité de profils de communication, chaque profil de communication actif autorisant le terminal de communication à communiquer avec un réseau de téléphonie mobile associé audit profil de communication.

Ce mode de réalisation permet avantageusement d'améliorer la gestion de l'état (actif/inactif) de profils dans un module eUICC et permet notamment de maintenir plusieurs profils actifs simultanément de sorte qu'il n'est plus nécessaire d'envoyer des requêtes d'activation et/ou de désactivation au module eUICC à chaque fois qu'il est nécessaire d'utiliser un profil différent. Il est ainsi possible de limiter le trafic réseau et les ressources normalement nécessaires à l'envoi et à la gestion des requêtes d'activation et de désactivation de profil.

Selon un mode de réalisation particulier, le terminal de communication comprend au moins une interface radio, chaque profil de communication actif étant apte, lorsqu'il a accès à ladite au moins une interface radio, à établir une communication entre le terminal de communication et le réseau de téléphonie mobile associé audit profil de communication actif.

Selon un mode de réalisation particulier, le module eUICC est configuré, sur réception d'une requête d'activation d'un profil de communication ou sur réception d'une requête de désactivation d'un profil de communication, pour maintenir à l'état actif un quelconque autre profil de communication déjà actif dans ledit module d'identité de souscripteur embarqué.

Selon un mode de réalisation particulier, le module eUICC comprend :
- un module de réception apte à recevoir une requête d'activation d'un premier profil de communication se trouvant à l'état inactif dans le module d'identité de souscripteur embarqué ;
- un module de configuration apte à configurer le module d'identité de souscripteur embarqué dans un premier mode ou dans un deuxième mode selon l'état d'un premier paramètre inclus dans ladite requête d'activation,
   dans lequel, lorsqu'un quelconque deuxième profil de communication distinct dudit premier profil est déjà actif à réception de ladite requête d'activation, le module d'identité de souscripteur embarqué est configuré :
   ∘ dans le premier mode, pour activer le premier profil de communication tout en maintenant actif ledit deuxième profil de communication ;
   ∘ dans le deuxième mode, pour activer le premier profil de communication et désactiver chaque profil de communication autre que le premier profil de communication.

Selon un mode de réalisation particulier, le module eUICC comprend :
- un module de réception apte à recevoir une requête de désactivation d'un premier profil de communication se trouvant déjà à l'état actif dans le module d'identité de souscripteur embarqué ;
- un module de configuration apte à configurer le module d'identité de souscripteur embarqué dans un troisième mode ou dans un quatrième mode selon l'état d'un deuxième paramètre inclus dans ladite requête de désactivation,
   dans lequel, lorsqu'un quelconque deuxième profil de communication distinct dudit premier profil est déjà actif à réception de ladite requête de désactivation, le module d'identité de souscripteur embarqué est configuré :
   ∘ dans le troisième mode, pour désactiver le premier profil de communication tout en maintenant actif ledit deuxième profil de communication;
   ∘ dans le quatrième mode, pour activer un profil de communication prédéfini en tant que profil par défaut et pour désactiver chaque profil de communication autre que ledit profil par défaut.

Selon un mode de réalisation particulier, dans le troisième mode, le module d'identité de souscripteur embarqué est configuré, en réponse à la requête de désactivation, pour maintenir actif le deuxième profil de communication y compris si ledit deuxième profil de communication n'est pas un profil de communication prédéfini par défaut dans le module eUICC.

Selon un mode de réalisation particulier, ladite commande d'activation et/ou ladite commande de désactivation sont des commandes APDU conformes à la norme ISO 7816-4.

Selon un mode de réalisation particulier, le module eUICC est apte, selon un cinquième mode, à recevoir une deuxième requête identifiant au moins deux profils de communication, chacun d'eux étant à activer ou à désactiver dans ledit module eUICC, ledit module eUICC étant apte, selon ledit cinquième mode :
- à configurer à l'état actif chaque profil de communication identifié comme profil à activer dans ladite deuxième requête ; et
- à configurer à l'état inactif chaque profil de communication identifié comme profil à désactiver dans ladite deuxième requête.

Selon un mode de réalisation particulier, la deuxième requête identifie au moins un premier profil de communication à activer dans le module d'identité de souscripteur embarqué et au moins un deuxième profil de communication à désactiver dans le module d'identité de souscripteur embarqué.

Selon un mode de réalisation particulier, la deuxième requête identifie uniquement au moins deux premiers profils de communication à activer ou uniquement au moins deux profils de communication à désactiver dans le module d'identité de souscripteur embarqué.

Selon un mode de réalisation particulier, la deuxième requête comprend un troisième paramètre pouvant prendre un premier état ou un deuxième état et un quatrième paramètre pouvant prendre un premier état, un deuxième état ou un troisième état,
dans lequel le module d'identité de souscripteur embarqué est configuré pour :
∘ traiter la deuxième requête en tant que commande d'activation lorsque le troisième paramètre est dans le premier état et le quatrième paramètre est dans le premier ou deuxième état ;
∘ traiter la deuxième requête en tant que commande de désactivation lorsque le troisième paramètre est dans le deuxième état et le quatrième paramètre est dans le premier ou deuxième état ; et
∘ traiter la deuxième requête en tant que commande hybride d'activation et de désactivation lorsque le troisième paramètre est dans le premier ou deuxième état, et que le quatrième paramètre est dans le troisième état.

Selon un mode de réalisation particulier, le module eUICC est configuré pour traiter la deuxième requête:
∘ selon le premier mode si le troisième paramètre est dans le premier état et le quatrième paramètre est dans le premier état ;
∘ selon le deuxième mode si le troisième paramètre est dans le premier état et le quatrième paramètre est dans le deuxième état ;
∘ selon le troisième mode si le troisième paramètre est dans le deuxième état et le quatrième paramètre est dans le premier état ;
∘ selon le quatrième mode si le troisième paramètre est dans le deuxième état et le quatrième paramètre est dans le deuxième état ; et
∘ selon le cinquième mode si le troisième paramètre est dans le premier état et le quatrième paramètre est dans le troisième état, ou si le troisième paramètre est dans le deuxième état et le quatrième paramètre est dans le troisième état.

Selon un mode de réalisation, l'invention est mise en œuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Un mode de réalisation concerne également un dispositif (par exemple un serveur de gestion de profil, de type SM-SR par exemple) apte à communiquer avec un terminal de communication coopérant avec un module eUICC, le dispositif comprenant :
- un module d'envoi apte à envoyer au module d'identité de souscripteur embarqué une requête d'activation d'un premier profil de communication se trouvant à l'état inactif dans le module d'identité de souscripteur embarqué ou pour envoyer une requête de désactivation d'un premier profil de communication se trouvant déjà à l'état actif dans le module d'identité de souscripteur embarqué ;
- un module d'insertion apte à inclure, avant envoi au module d'identité de souscripteur embarqué, l'un parmi :
   ∘ un premier paramètre dans la requête d'activation ; et
   ∘ un deuxième paramètre dans la requête de désactivation,
dans lequel :
- le premier paramètre est dans un état définissant si le module d'identité de souscripteur embarqué doit se configurer dans un premier mode ou dans un deuxième mode lorsqu'un quelconque deuxième profil de communication distinct dudit premier profil est déjà actif dans le module d'identité de souscripteur embarqué à réception de ladite requête d'activation, l'état du premier paramètre commandant au module d'identité de souscripteur embarqué :
   ∘ dans le premier mode, d'activer le premier profil de communication tout en maintenant actif ledit deuxième profil de communication ;
   ∘ dans le deuxième mode, d'activer le premier profil de communication et désactiver chaque profil de communication autre que le premier profil de communication.
- le deuxième paramètre est dans un état définissant si le module d'identité de souscripteur embarqué doit se configurer dans un troisième mode ou dans un quatrième mode lorsqu'un quelconque deuxième profil de communication distinct dudit premier profil est déjà actif à réception de ladite requête de désactivation, l'état du deuxième paramètre commandant au module d'identité de souscripteur embarqué :
   ∘ dans le troisième mode, de désactiver le premier profil de communication tout en maintenant actif ledit deuxième profil de communication ;
   ∘ dans le quatrième mode, d'activer un profil de communication prédéfini en tant que profil par défaut et désactiver chaque profil de communication autre que ledit profil par défaut.

Les divers modes de réalisation définis ci-avant en référence au module eUICC s'appliquent par analogie au dispositif de l'invention.

Un mode de réalisation concerne aussi un système comprenant :
- un module eUICC tel que défini ci-avant ;
- un terminal de communication coopérant avec le module eUICC ; et
- au moins un dispositif tel que défini ci-avant.

Corrélativement, un mode de réalisation concerne un procédé de contrôle mis en œuvre par un module d'identité de souscripteur embarqué (eUICC) apte à coopérer avec un terminal de communication, ledit procédé comprenant une étape de maintien à l'état actif, simultanément, d'une pluralité de profils de communication, chaque profil de communication actif autorisant le terminal de communication à communiquer avec un réseau de téléphonie mobile associé audit profil de communication.

Un mode de réalisation concerne aussi un procédé d'envoi mis en œuvre par un dispositif tel que défini ci-avant pour envoyer une commande à un module eUICC.

Dans un mode particulier de réalisation, les différentes étapes du procédé de contrôle et du procédé d'envoi sont déterminées par des instructions de programmes d'ordinateurs.

En conséquence, un mode de réalisation vise aussi un programme d'ordinateur sur un support d'informations (ou support d'enregistrement), ce programme étant susceptible d'être mis en œuvre dans un module d'identité de souscripteur embarqué, dans un dispositif, ou plus généralement dans un ordinateur, ce programme comportant des instructions adaptées à la mise en œuvre des étapes d'un procédé de contrôle ou d'un procédé d'envoi tels que définis ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Un mode de réalisation vise aussi un support d'informations (ou support d'enregistrement) lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, mémoire de type flash ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
- la figure 1 représente schématiquement un système comprenant un module d'identité de souscripteur embarqué et un serveur de gestion de profil, selon un mode de réalisation particulier de l'invention ;
- les figures 2A et 2B représentent schématiquement deux modes de réalisation du terminal ;
- la figure 3 représente schématiquement des modules mis en œuvre dans le module d'identité de souscripteur embarqué de la figure 1, conformément à un mode de réalisation particulier de l'invention ;
- la figure 4 représente, sous forme d'un diagramme, les étapes d'un procédé de contrôle et d'un procédé d'envoi, conformément à un mode de réalisation particulier de l'invention ;
- la figure 5 représente, sous forme d'un diagramme, les étapes d'un procédé de contrôle et d'un procédé d'envoi, conformément à un mode de réalisation particulier de l'invention ;
- la figure 6 représente schématiquement une commande susceptible d'être envoyée par un serveur de gestion de profils à un module d'identité de souscripteur embarqué, selon un mode de réalisation particulier de l'invention ;
- la figure 7 représente, sous forme d'un diagramme, les étapes d'un procédé de contrôle et d'un procédé d'envoi, conformément à un mode de réalisation particulier de l'invention ; et
- les figures 8 et 9 représentent schématiquement des commandes susceptibles d'être envoyées par un serveur de gestion de profils à un module d'identité de souscripteur embarqué, conformément à un mode de réalisation particulier de l'invention.

### Description détaillée de modes de réalisation

Comme déjà indiqué, l'invention se rapporte aux modules d'identité de souscripteur embarqués (appelés aussi « modules eUICC ») et concerne plus particulièrement l'utilisation de tels modules pour gérer simultanément plusieurs profils de communication en coopération avec un terminal de communication.

Aujourd'hui, le standard GSMA SGP.02 v3.0 (appelé par la suite « standard GSMA ») impose une contrainte en ce que seulement un profil à la fois peut être à l'état actif dans un module eUICC. Autrement dit, le standard GSMA interdit le cas où plusieurs profils de communication seraient actifs en même temps dans un module eUICC.

Dans les modules eUICC conventionnels, le fait que seul un profil puisse être actif à un instant donné a pour conséquence qu'il n'est pas possible d'utiliser plusieurs souscriptions de téléphonie mobile simultanément, comme cela est possible par exemple dans un téléphone DUAL SIM utilisant deux cartes SIM distinctes en même temps.

Pour utiliser simultanément plusieurs souscriptions dans un même terminal de communication, une solution pourrait consister à intégrer plusieurs modules eUICC dans un même terminal de communication. Une telle approche présente toutefois des contraintes importantes en termes de coût et de fabrication notamment.

Afin notamment de résoudre les problèmes évoqués ci-avant et d'améliorer la gestion de profils de communication dans un module eUICC, la présente invention propose de configurer un module eUICC de sorte à ce qu'il puisse maintenir à l'état actif une pluralité de profils de communication en même temps.

On comprend ici par profil « actif », ou profil à l'état « actif », le fait qu'un profil de communication est activé dans le module eUICC afin d'autoriser le terminal de communication (avec lequel le module eUICC coopère) à communiquer avec le réseau de téléphonie associé au profil en question. Conformément au standard GSMA, un profil (ou le domaine sécurisé ISD-P dans lequel il est contenu) est dit « actif » (ENABLE) lorsque son paramètre d'état, dénommé « life cycle », est positionné à l'état '3F'. Selon le standard GSMA, un profil est au contraire dit « inactif » (DISABLE) lorsque son paramètre d'état « life cycle » est positionné à l'état '1F'.

Comme expliqué plus en détail par la suite, un profil de communication peut être actif sans pour autant avoir accès à l'interface radio du terminal de communication. L'accès à cette interface radio peut dans certains cas être limité notamment lorsqu'il n'y a pas autant d'interfaces radio dans le terminal de communication que de profils actifs en même temps dans le module eUICC. Un profil actif ne permet l'établissement d'une communication entre le terminal de communication et le réseau de téléphonie mobile associé au profil que lorsque ce dernier a accès à la ressource radio du terminal de communication.

Sauf indications contraires, les éléments communs ou analogues à plusieurs figures portant les mêmes signes de référence et présentant des caractéristiques identiques ou analogues, de sorte que ces éléments communs ne sont généralement pas à nouveau décrits par souci de simplicité.

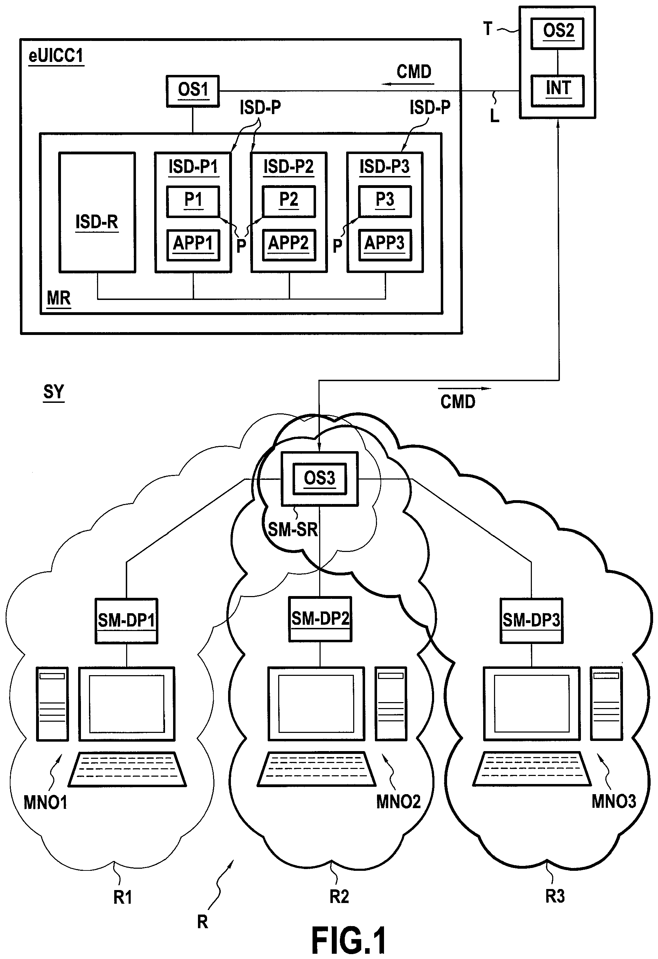

La **figure 1** représente, de manière schématique, la structure d'un module eUICC (noté ici eUICC1) apte à coopérer avec un terminal de communication T pour permettre l'accès à un réseau de téléphonie mobile R. Le module eUICC1 est par exemple soudé ou intégré au terminal T.

Dans le mode de réalisation décrit ici, le terminal T est un terminal mobile tel qu'un téléphone portable par exemple, d'autres mises en œuvre étant toutefois envisageables dans le cadre de l'invention.

Dans le mode de réalisation décrit ici, le terminal mobile T peut utiliser le module eUICC1 pour accéder de façon sécurisée aux réseaux R1, R2 et R3 (appelés collectivement R), ainsi qu'aux services fournis par l'opérateur respectif de téléphonie MNO1, MNO2 et MNO3 (appelés collectivement MNO pour « *Mobile Network Operator* »).

Dans ce mode de réalisation particulier, le terminal mobile T comporte un système d'exploitation OS2 apte à contrôler notamment une interface radio INT. L'interface radio INT du terminal T est apte à émettre et à recevoir des communications radio avec l'extérieur via par exemple une antenne (non représentée).

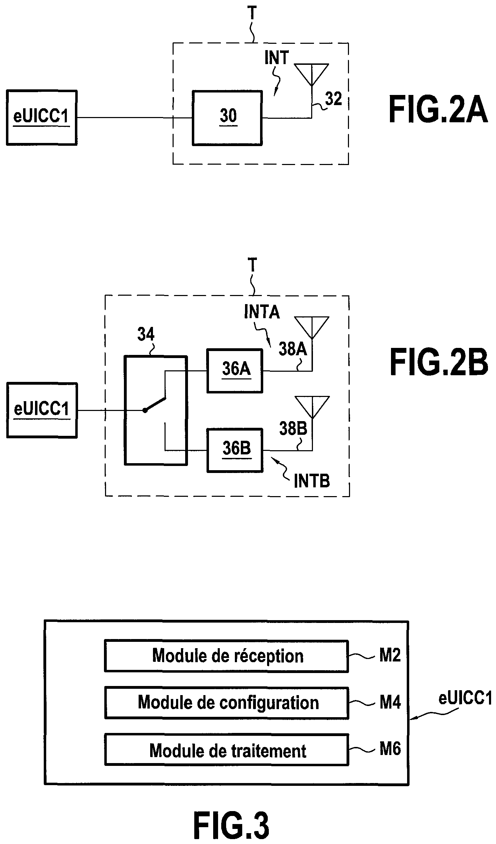

Comme représenté en **figure 2A****,** cette interface radio INT comprend par exemple, de façon connue, une unité émettrice/réceptrice radio 30 couplée à une antenne 32. Comme expliqué ultérieurement en référence à la **figure 2B****,** on peut également envisager la présence dans le terminal T d'une pluralité d'interfaces radio.

Dans le mode de réalisation décrit ici, le module eUICC1 comprend un système d'exploitation OS1 (stocké dans une mémoire non-volatile, une mémoire morte ou Flash par exemple) couplé à une mémoire non volatile réinscriptible MR.

Le système d'exploitation OS1 comprend un certain nombre de modules qui seront décrits plus en détail ultérieurement en référence à la **figure 3****.**

Le système d'exploitation OS1 constitue un exemple de programme d'ordinateur au sens de l'invention, ce programme comportant des instructions pour l'exécution des étapes d'un procédé de contrôle selon un mode de réalisation particulier de l'invention. La mémoire dans laquelle se trouve le système d'exploitation OS1 constitue ainsi un exemple de support d'enregistrement au sens de l'invention, lisible par un processeur (non représenté) du module eUICCI.

Comme représenté en **figure 1****,** la mémoire non volatile MR du module eUICC1 comporte par ailleurs un domaine de sécurité privilégié ISD-R, ainsi qu'une pluralité de domaines de sécurité secondaires ISD-P notés dans cet exemple ISD-P1, ISD-P2 et ISD-P3. Chaque domaine de sécurité ISD-P (ou domaine sécurisé) constitue un compartiment sécurisé du module eUICC1. On comprendra que le mode de réalisation particulier envisagé ici ne constitue qu'un exemple non limitatif de mise en oeuvre de l'invention, le nombre de domaines ISD-P pouvant notamment être adapté selon le cas d'usage.

Le domaine de sécurité ISD-R est privilégié en ce qu'il est notamment apte à créer, supprimer, activer ou désactiver des domaines de sécurité secondaires ISD-P dans la mémoire non volatile MR. Dans les exemples de réalisation décrits ci-après, c'est le domaine de sécurité ISD-R qui gère l'état actif ou inactif des profils de communication du module eUICC1.

Chaque domaine de sécurité secondaire ISD-P est apte à contenir un unique profil de communication P (ou profil opérationnel) associé à un opérateur MNO de téléphonie particulier. Chaque profil P est ainsi contenu dans un domaine de sécurité ISD-P qui lui est dédié. De façon connue, un profil de communication P comporte des données de souscription (e.g. identifiants (IMSI etc.), clés cryptographiques, algorithmes (e.g. d'authentification)...) et peut comporter en outre un système de fichiers, des applications, et/ou des règles d'exécution prédéterminées. Dans l'exemple envisagé ici, les profils P sont conformes au standard GSMA.

Dans l'exemple décrit ici, comme illustré en **figure 1****,** on suppose que la mémoire MR du module eUICC1 comprend trois domaines de sécurité secondaire notés ISD-P1, ISD-P2 et ISD-P3, ces domaines de sécurité secondaires contenant respectivement un profil unique P1, P2 et P3 pouvant chacun être à l'état actif ou inactif.

Le profil P1 (respectivement P2) autorise, lorsqu'il est actif, le terminal T à communiquer avec un réseau mobile R1 (respectivement R2) associé à l'opérateur de téléphonie MNO1 (respectivement MNO2). Le domaine de sécurité ISD-P1 (respectivement ISD-P2) peut en outre comprendre des applications APP1 (respectivement APP2) propres à l'opérateur MNO1 (respectivement MNO2) auxquelles l'utilisateur a souscrit. Alternativement, les applications APP1 (respectivement APP2) définies pour le profil P1 (respectivement P2) peuvent être contenues dans le profil P1 (respectivement P2) lui-même.

Dans cet exemple, dans certains cas (qui seront décrits plus en détails ultérieurement), le profil P3 contenu dans le domaine de sécurité secondaire ISD-P3 est traité par le module eUICC1 en tant que profil prédéfini par défaut dans le sens où ce profil est automatiquement activé par défaut sur réception d'une requête de désactivation d'un autre profil actif dans le module eUICC.

De même que les profils P1 et P2, le profil P3 autorise, lorsqu'il est actif, le terminal T à communiquer avec un réseau mobile R3 associé à un opérateur de téléphonie MNO3. Le domaine de sécurité ISD-P3 peut également comprendre des applications APP3 propres à l'opérateur MNO3 auxquelles l'utilisateur a souscrit. Alternativement, les applications APP3 définies pour le profil P3 peuvent être contenues dans le profil P3 lui-même.

Conformément à l'invention, le module eUICC1 est apte à maintenir une pluralité de profils de communication P à l'état actif en même temps.

Le module eUICC1 est par ailleurs apte à communiquer, par l'intermédiaire du terminal T (et en particulier de son interface radio INT), de façon sécurisée avec un serveur de gestion de profil qui, dans cet exemple, est un serveur SM-SR (pour « *Subscription Manager-Secure Routing* »)*.* Dans cet exemple, le serveur de gestion de profil SM-SR appartient à chacun des réseaux R1, R2 et R3.

La communication entre le module eUICC1 et le terminal T est par exemple réalisée via une liaison L conforme à la norme ISO 7816 (plus particulièrement selon ISO 7816-3 et ISO 7816-4).

Dans ce mode de réalisation particulier, le serveur SM-SR permet à chaque opérateur MNO de contrôler l'état (actif ou inactif) du profil P dont il a la charge dans le module eUICC1. On suppose ici que les opérateurs MNO1, MNO2 et MNO3 sont chacun aptes à commander le serveur SM-SR afin que ce dernier active ou désactive les profils P1, P2 et P3 respectivement. Pour ce faire, le serveur SM-SR est apte à envoyer une commande CMD d'activation ou de désactivation au terminal T à destination du module eUICC1. Ces commandes sont par exemple de type APDU conformes à la norme ISO 7816-4.

Dans l'exemple considéré ici, le serveur SM-SR met en œuvre un système d'exploitation OS3 enregistré dans un support d'information (non représenté).

Le module eUICC1 est apte à recevoir les commandes CMD d'activation ou de désactivation provenant du serveur distant SM-SR et à diriger celles-ci vers le domaine de sécurité privilégié ISD-R. En réponse à une commande CMD, le domaine de sécurité privilégié ISD-R est configuré pour activer ou désactiver au moins un profil P dans le module eUICC1.

Le module eUICC1, le terminal T et le serveur de gestion de profil SM-SR forment ensemble un système SY.

On comprendra que certains éléments généralement présents dans un module eUICC, dans un terminal de communication T ou encore dans un serveur SM-SR ont été volontairement omis car ils ne sont pas nécessaires à la compréhension de la présente invention. En outre, l'homme du métier comprendra que certains éléments sont décrits ici pour faciliter la compréhension de l'invention bien qu'ils ne soient pas obligatoires ou directement impliqués pour mettre en œuvre l'invention.

Comme indiqué ci-avant en référence à la **figure 2A****,** le terminal T peut comprendre une unique interface radio INT. Dans ce cas, seul un des profils P actifs dans le module eUICC1 peut permettre, à un instant donné, l'établissement d'une communication entre le terminal T et le réseau mobile R. Dans ce cas, lorsque qu'au moins deux parmi les profils P1, P2 et P3 sont actifs en même temps, seul l'un des deux profils P est apte à établir une communication avec le réseau de l'opérateur MNO associé.

On peut toutefois envisager l'inclusion dans le terminal T d'une pluralité d'interfaces radio INT. La **figure 2B** représente par exemple un mode de réalisation selon lequel le terminal T comprend un commutateur 34 apte à aguiller les communications entre le module eUICC1 et deux interface radio INTA et INTB du terminal T. L'interface radio INTA (respectivement INTB) comprend ici une unité émettrice/réceptrice radio 36A (respectivement 36B) couplée à une antenne 38A (respectivement 38B). Selon ce mode de réalisation, le commutateur 34 peut diriger chaque commande CMD reçue par l'une des interfaces radio INTA, INTB vers le module eUICC1. Lorsqu'un canal entre le module eUICC1 et une interface radio INTA, INTB est utilisé, l'autre canal entre le module eUICC1 et l'autre interface radio n'est pas disponible. D'autres mises en œuvre de l'invention son toutefois envisageables.

Comme déjà indiqué, un profil de communication P qui est actif dans le module eUICC1 n'est apte à établir une communication entre le terminal T et un réseau mobile R associé que lorsque ce profil P a accès aux ressources radio du terminal T (c'est-à-dire à l'interface radio).

Selon un mode de réalisation particulier, le terminal T est apte à multiplexer dans le temps les données envoyées ou reçues par différents profils P dans le module eUICC1.

Dans le mode de réalisation décrit ici, le terminal de communication T comprend au moins une interface radio INT, chaque profil de communication P actif dans le module eUICC1 étant apte, lorsqu'il a accès à ladite au moins une interface radio INT, à établir une communication entre le terminal T et le réseau de téléphonie mobile R associé au profil de communication P actif.

Conformément à l'invention, le module eUICC1 est apte à maintenir simultanément à l'état actif une pluralité de profils de communication P, parmi les profils P1, P2 et P3 dans cet exemple. Comme cela apparaîtra dans la suite de cet exposé, diverses configurations du module eUICC1 peuvent être envisagées dans le cadre de l'invention.

Dans le mode de réalisation décrit ici, le module eUICC1 est configuré, sur réception d'une requête CMD d'activation d'un profil P ou sur réception d'une requête CMD de désactivation d'un profil P, pour maintenir à l'état actif un quelconque autre profil P déjà actif dans le module eUICC1. Si par exemple un premier profil P est actif dans le module eUICC1 à réception d'une requête CMD d'activation d'un deuxième profil P (distinct du premier profil), le module eUICC1 est configuré pour activer le deuxième profil et pour maintenir actif le premier profil, quel qu'il soit.

De même, si par exemple un premier et un deuxième profil P sont actifs à réception d'une requête CMD de désactivation du premier profil P, le module eUICC1 est configuré pour désactiver le premier profil P et pour maintenir à l'état actif le deuxième profil P quel qu'il soit (i.e. même si le deuxième profil P n'est pas le profil P3 prédéfini par défaut).

Comme représenté en **figure 3****,** le système d'exploitation OS1 du module eUICC1 met en œuvre dans cet exemple un certain nombre de modules, à savoir : un module de réception M2, un module de configuration M4 et un module de traitement M6. Dans les exemples de réalisation considérés ici, ces modules M2, M4 et M6 sont exécutés par le domaine de sécurité ISD-R du module eUICC1. Plus précisément, comme décrit par la suite, le domaine de sécurité ISD-R est configuré pour contrôler l'état (actif ou inactif) des profils P du module eUICC1. La gestion de l'état des profils P1-P3 est effectuée par le domaine de sécurité ISD-R en réponse à une ou des commandes qu'il reçoit du terminal T.

Le module de réception M2 est apte à recevoir une requête CMD de gestion de profil provenant du serveur SM-SR. Comme déjà indiqué, il peut s'agir d'une requête d'activation ou une requête de désactivation d'un profil P donné dans le module eUICC1. Comme expliqué par la suite, d'autres types de commandes CMD peuvent être envisagés dans le cadre de l'invention.

Le module de configuration M4 est apte à configurer le module eUICC1 selon divers modes de fonctionnement, selon le cas d'usage considéré.

Le module de traitement M6 est apte, en réponse à une commande CMD d'activation ou de désactivation, à gérer l'état (actif ou inactif) des profils P dans le module eUICC1, et ce conformément au mode de fonctionnement dans lequel le module de configuration M4 a configuré le module eUICC1.

On comprendra que la définition ci-dessus des modules M2 à M6 ne constitue qu'un mode de réalisation non limitatif de l'invention. Au moins deux parmi ces modules peuvent notamment former un seul et même module mis en œuvre dans le module eUICC1.

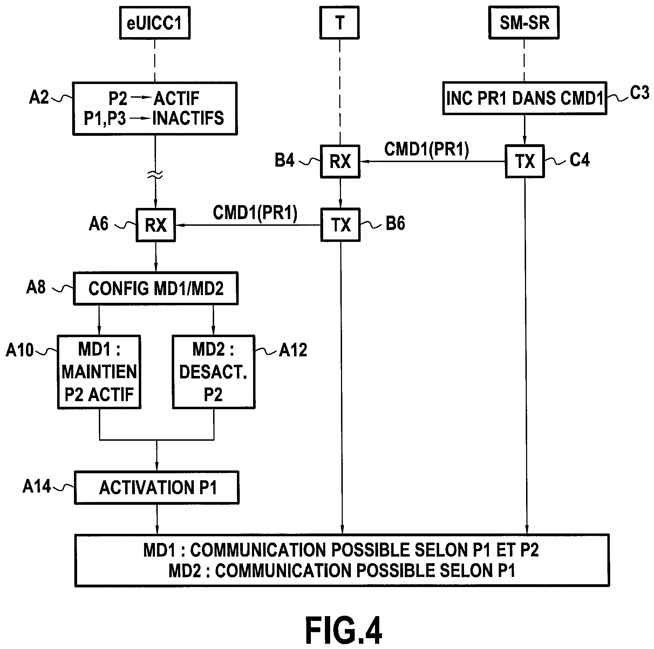

Un mode de réalisation particulier de l'invention, mis en œuvre par le module eUICC1 et par le serveur de gestion de profil SM-SR, est à présent décrit en référence au diagramme de la **figure 4****.** Pour ce faire, le module eUICC1 exécute le système d'exploitation OS1 pour mettre en œuvre un procédé de contrôle selon un mode de réalisation particulier, et le serveur de gestion de profil SM-SR exécute le système d'exploitation OS3 pour mettre en œuvre un procédé d'envoi selon un mode de réalisation particulier.

On suppose ici que le profil P2 est actif et que les profils P1 et P3 sont inactifs dans le module eUICC1 (A2).

Au cours d'une étape d'inclusion C3, le serveur SM-SR génère une commande (ou requête) CMD1 d'activation du profil P1 et inclut dans la commande CMD1 un paramètre PR1 indiquant selon quel mode de fonctionnement ladite commande CMD1 doit être traitée par le module eUICC1.

Au cours d'une étape d'envoi C4, le serveur de gestion de profil SM-SR envoie la commande CMD1 au terminal T.

Une fois reçue (B4), le terminal T envoie (B6) la commande CMD1 au module eUICC1.

Le module eUICC1 reçoit la commande CMD1 au cours d'une étape de réception A6.

Le module eUICC1 se configure (A8) alors dans un mode de fonctionnement, ledit mode étant fonction du paramètre PR1 inclus dans la commande CMD1 reçue. Plus particulièrement, le module de configuration M4 configure le module eUICC1 dans un premier mode MD1 ou dans un deuxième mode MD2 selon l'état du paramètre PR1. Selon une variante, le paramètre PR1 est reçu séparément de la commande CMD1.

Si le module eUICC1 se configure en A8 selon le premier mode MD1 pour traiter la commande CMD1 d'activation du profil P1, le procédé se poursuit avec les étapes A10 et A14. Plus particulièrement, selon ce mode MD1, en réponse à la commande d'activation CMD1, le module eUICC1 (et plus particulièrement le module de traitement M6) maintient (A10) actif le profil P2, qui était déjà actif à réception de la commande CMD1, et active (A14) le profil P1.

Si, en revanche, le module eUICC1 se configure en A8 selon le deuxième mode MD2 pour traiter la commande CMD1 d'activation du profil P1, le procédé se poursuit avec les étapes A12 et A14. Plus particulièrement, selon ce deuxième mode MD2, en réponse à la commande CMD1, le module eUICC1 (et plus particulièrement le module de traitement M6) désactive (A12) le profil P2 et active (A14) le profil P1. Autrement dit, dans le deuxième mode MD2, en réponse à une requête d'activation d'un premier profil P, le module eUICC1 active ledit premier profil P et désactive chaque profil autre que ledit premier profil P.

Dans cet exemple, à l'issue du traitement de la commande CMD1 selon le premier mode MD1, les profils P1 et P2 autorisent le terminal T à communiquer avec respectivement le réseau mobile R1 et R2.

A l'issue du traitement de la commande CMD1 selon le deuxième mode MD2, seul le profil P1 autorise le terminal T à communiquer avec le réseau mobile R1.

Autrement dit, dans le deuxième mode MD2, le module eUICC1 traite de manière conventionnelle la commande d'activation CMD1 du profil P1, un seul profil pouvant être actif à la fois dans le module eUICC. En revanche, dans le premier mode MD1, le module eUICC1 traite la commande d'activation CMD1 selon le principe de l'invention de sorte que plusieurs profils P puissent être actifs simultanément dans le module eUICC1.

L'utilisation du paramètre PR1 permet avantageusement de contrôler la manière dont l'état des profils est géré dans un module eUICC en réponse à une requête d'activation de l'un parmi les profils du module eUICC.

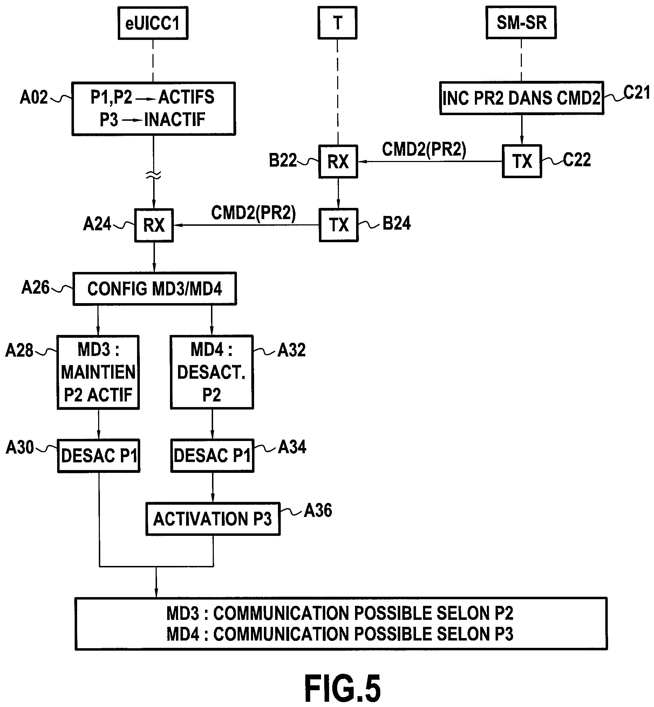

Un mode de réalisation particulier de l'invention, mis en œuvre par le module eUICC1 et par le serveur de gestion de profil SM-SR, est à présent décrit en référence au diagramme de la **figure 5****.** Pour ce faire, le module eUICC1 exécute le système d'exploitation OS1 pour mettre en œuvre un procédé de contrôle selon un mode de réalisation particulier, et le serveur de gestion de profil SM-SR exécute le système d'exploitation OS3 pour mettre en œuvre un procédé d'envoi selon un mode de réalisation particulier.

On suppose ici que les profils P1 et P2 sont actifs et que le profil P3 est inactif dans le module eUICC1 (A20).

Au cours d'une étape d'inclusion C21, le serveur SM-SR génère une commande (requête) CMD2 de désactivation du profil P1 et inclut dans la commande CMD2 un paramètre PR2 indiquant selon quel mode de fonctionnement ladite commande CMD2 doit être traitée par le module eUICC1.

Au cours d'une étape d'envoi C22, le serveur de gestion de profil SM-SR envoie la commande CMD2 au terminal T.

Une fois reçue (B22), le terminal T envoie (B24) la commande CMD2 au module eUICC1.

Le module eUICC1 reçoit la commande CMD2 au cours d'une étape de réception A24.

Le module eUICC1 se configure (A26) alors dans un mode de fonctionnement, ledit mode étant fonction du paramètre PR2 inclus dans la commande CMD2 reçue. Plus particulièrement, le module de configuration M4 configure le module eUICC1 dans un troisième mode MD3 ou dans un quatrième mode MD4 selon l'état du paramètre PR2. Selon une variante, le paramètre PR2 est reçu séparément de la commande CMD2.

Si le module eUICC1 se configure en A26 selon le troisième mode MD3 pour traiter la commande CMD2 de désactivation du profil P1, le procédé de contrôle se poursuit avec les étapes A28 et A30. Plus particulièrement, selon ce troisième mode MD3, en réponse à la commande de désactivation CMD2, le module eUICC1 (et plus particulièrement le module de traitement M6) maintient (A28) actif le profil P2, quel que soit le profil P2 concerné (même si le profil P2 n'est pas un profil prédéfini en tant que profil par défaut dans le module eUICC1), et désactive (A30) le profil P1.

Dans un exemple particulier, selon le troisième mode MD3, en réponse à la commande de désactivation CMD2, le module eUICC1 maintient en outre inactif le profil P3 prédéfini par défaut.

Si, en revanche, le module eUICC1 se configure en A26 selon le quatrième mode MD4 pour traiter la commande CMD2 de désactivation du profil P1, le procédé de contrôle se poursuit avec les étapes A32, A34 et A36. Plus particulièrement, selon ce quatrième mode MD4, en réponse à la commande de désactivation CMD2, le module eUICC1 (et plus particulièrement le module de traitement M6) désactive (A32) le profil P2, désactive (A34) le profil P1 et active (A36) le profil P3 en tant que profil prédéfini par défaut. Autrement dit, dans ce quatrième mode MD4, en réponse à une requête de désactivation d'un premier profil P, le module eUICC1 active le profil prédéfini en tant que profil par défaut dans le module eUICC1 et désactive chaque profil autre que ledit profil prédéfini par défaut.

Dans cet exemple, à l'issue du traitement de la commande de désactivation CMD2 selon le troisième mode MD3, seul le profil P2 autorise le terminal T à communiquer avec le réseau mobile R2.

A l'issue du traitement de la commande de désactivation CMD2 selon le quatrième mode MD4, seul le profil P3 autorise le terminal T à communiquer avec le réseau mobile R3.

Autrement dit, dans le quatrième mode MD4, le module eUICC1 traite de manière conventionnelle la commande de désactivation CMD2 du profil P1. En revanche, dans le troisième mode MD3, le module eUICC1 traite la commande de désactivation CMD2 selon le principe de l'invention de sorte que plusieurs profils P puissent être actifs simultanément dans le module eUICC1. Selon le mode MD3, la désactivation d'un profil ne cause pas systématiquement l'activation d'un profil prédéfini par défaut dans le module eUICC, comme c'est le cas dans les modules eUICC conventionnels.

L'utilisation du paramètre PR2 permet avantageusement de contrôler la manière dont l'état des profils est géré dans un module eUICC en réponse à une requête de désactivation de l'un parmi les profils du module eUICC.

Les commandes CMD1 et CMD2 mentionnées précédemment sont par exemple des commandes APDU conformes à la norme ISO 7816-4.

Comme indiqué ci-avant, divers modes de réalisation sont envisageables dans le cadre de l'invention.

Dans les modes de réalisation décrits ci-avant en référence aux **figures 4** et **5****,** le serveur de gestion de profil SM-SR (illustré en **figure 1**), piloté par un programme d'ordinateur enregistré dans une mémoire non-volatile dudit serveur SM-SR, met par exemple en œuvre les modules suivants :
- un module d'envoi apte à envoyer au module eUICC1 la requête d'activation CMD1 et/ou pour envoyer la requête de désactivation CMD2 ;
- un module d'insertion apte à inclure, avant envoi au module eUICC1, au moins l'un parmi :
   ▪ le premier paramètre PR1 dans la requête d'activation CMD1 ; et
   ▪ le deuxième paramètre PR2 dans la requête de désactivation ;
dans lequel le paramètre PR1 est dans un état définissant si le module eUICC1 doit se configurer dans le premier mode MD1 ou dans le deuxième mode MD2 pour traiter la commande d'activation CMD1 ; et
dans lequel le paramètre PR2 est dans un état définissant si le module eUICC1 doit se configurer dans le troisième mode MD1 ou dans un quatrième mode MD4 pour traiter la commande de désactivation CMD2.

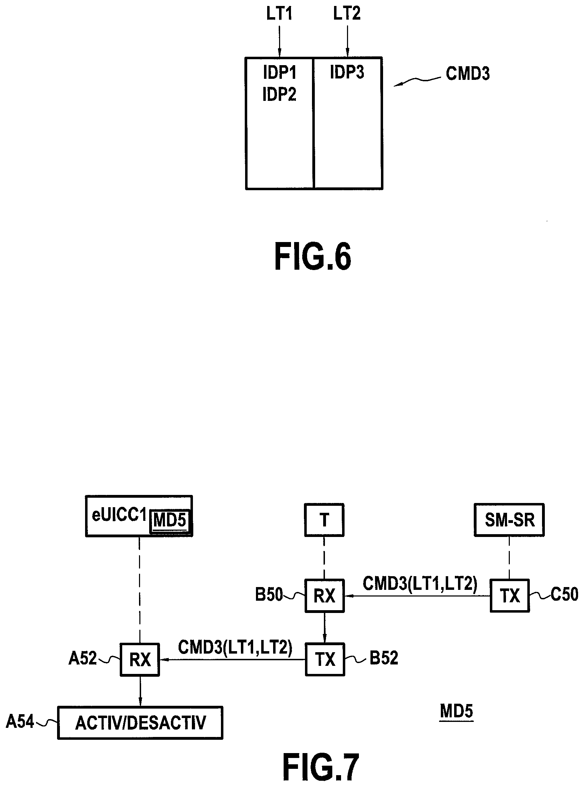

Un mode de réalisation particulier est à présent décrit en référence aux **figures 6** et **7****.** Dans ce mode de réalisation, le module eUICC1 est ici aussi apte à maintenir simultanément à l'état actif une pluralité de profils de communication P, chaque profil P actif autorisant le terminal de communication T à communiquer avec un réseau de téléphonie mobile R associé audit profil de communication. En revanche, le module eUICC1 est configuré pour gérer l'état des profils P dans le module eUICC1 de façon différente de ce qui a été décrit précédemment en référence aux modes de réalisation illustrés en **figures 4** et **5****.**

Dans le mode de réalisation illustré en **figures 6** et **7****,** le serveur de gestion de profil SM-SR est configuré pour envoyer au module eUICC1, via le terminal T, une commande (ou requête) CMD3, dite commande hybride. La commande hybride CMD3 identifie au moins deux profils P, chacun d'eux devant être activer ou désactiver dans le module eUICC concerné. Autrement dit, la commande hybride CMD3 commande, pour chacun parmi au moins deux profils de communication P, l'activation ou la désactivation dans le module eUICC de destination.

Dans ce mode de réalisation, on suppose que le module eUICC1 fonctionne selon un cinquième mode MD5. Selon ce mode MD5, le module eUICC1 est apte :
- à configurer à l'état actif chaque profil de communication P identifié comme profil à activer dans la commande hybride CMD3 ; et
- à configurer à l'état inactif chaque profil de communication P identifié comme profil à désactiver dans la commande hybride CMD3.

Comme illustré en **figure 6****,** la commande CMD3 contient par exemple une première liste LT1 identifiant au moins un profil P à activer, et une deuxième liste LT2 identifiant au moins un profil P à désactiver. L'une parmi ces listes LT1, LT2 peut, le cas échéant, être vide.

Dans l'exemple illustré en **figure 6****,** la liste LT1 comprend les identifiants IDP1 et IDP2 des profils respectifs P1 et P2. De plus, la liste LT2 comprend l'identifiant IDP3 du profil P3. Aussi, dans cet exemple particulier, en réponse à la commande hybride CMD3, le module eUICC1 active les profils P1 et P2, et désactive le profil P3.

Ce mode de réalisation permet avantageusement de commander simultanément, pour chacun parmi une pluralité de profils P, l'activation ou la désactivation dans un module eUICC. Il est ainsi possible de requérir, en une seule commande, une configuration plus ou moins complexe d'état de profils dans un module eUICC.

Selon un exemple particulier, la commande hybride CMD3 identifie au moins un premier profil P à activer dans le module eUICC1 et au moins un deuxième profil P à désactiver dans le module eUICC1. Autrement dit, la commande CMD3 est ici à la fois une commande d'activation et de désactivation, ce qui permet avantageusement de commander précisément, et de façon simultanée, une configuration d'état de profils à mettre en œuvre dans un module eUICC.

Selon un exemple particulier, la commande hybride CMD3 identifie uniquement au moins deux profils P à activer (c'est-à-dire au moins deux profils P à activer, et aucun profil P à désactiver). Dans ce cas, la commande CMD3 est exclusivement une commande d'activation dans le sens où elle ne commande pas de désactivation de profil.

Selon un exemple particulier, la commande hybride CMD3 identifie uniquement au moins deux profils P à désactiver (c'est-à-dire au moins deux profils P à désactiver, et aucun profil P à activer). Dans ce cas, la commande CMD3 est exclusivement une commande de désactivation dans le sens où elle ne commande pas d'activation de profil.

On décrit à présent, en référence aux **figures 6** et **7****,** un procédé de contrôle mis en œuvre par le module eUICC1 et un procédé d'envoi mis en œuvre par le serveur de gestion de profil SM-SR, selon un exemple particulier de réalisation.

Au cours d'une étape C50, le serveur SM-SR envoie au terminal T une commande hybride CMD3 à destination du module eUICC1, cette commande CMD3 comportant les identifiants IDP1 et IDP2 des profils respectifs P1 et P2 dans la liste LT1, et l'identifiant IDP3 du profil P3 dans la liste LT2.

Une fois reçu (B50), le terminal T envoie (B52) la commande CMD3 comprenant les listes LT1 et LT2 au module eUICC1.

Le module eUICC1 reçoit la commande CMD3 au cours d'une étape de réception A52.

Le module eUICC1 configure (A54) l'état des profils de communication P à partir de la commande CMD3, et plus particulièrement à partir des profils P identifiés dans la commande CMD3 comme profils à activer et/ou comme profils à désactiver. Comme déjà indiqué, on suppose que le module eUICC1 fonctionne ici selon un cinquième mode MD5. Dans l'exemple présent, selon le mode MD5, le module eUICC1 :
- configure à l'état actif chaque profil de communication P (à savoir P1 et P2) identifié comme profil à activer dans la commande hybride CMD3 ; et
- configure à l'état inactif chaque profil de communication P (à savoir P3) identifié comme profil à désactiver dans la commande hybride CMD3.

On peut également envisager de mettre en œuvre l'invention selon une quelconque combinaison des modes de réalisation et variantes décrits ci-avant.

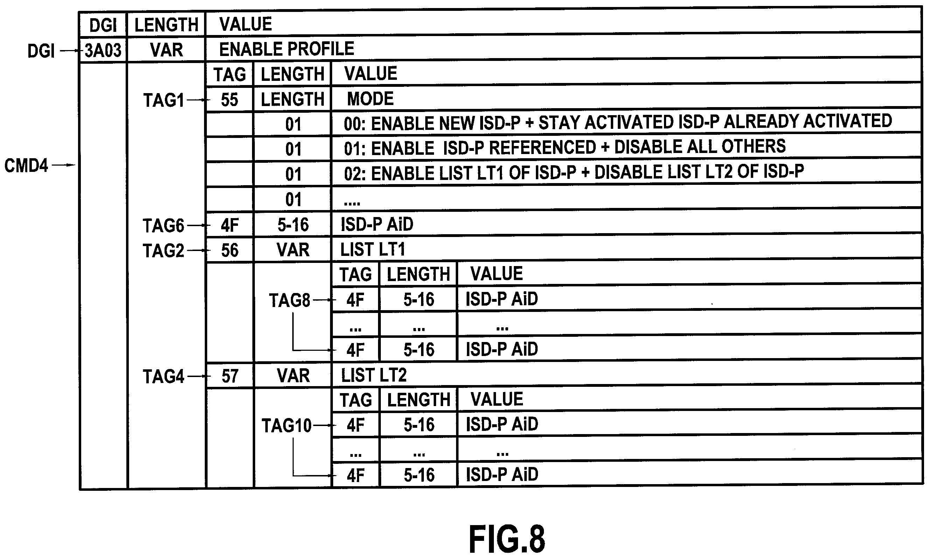

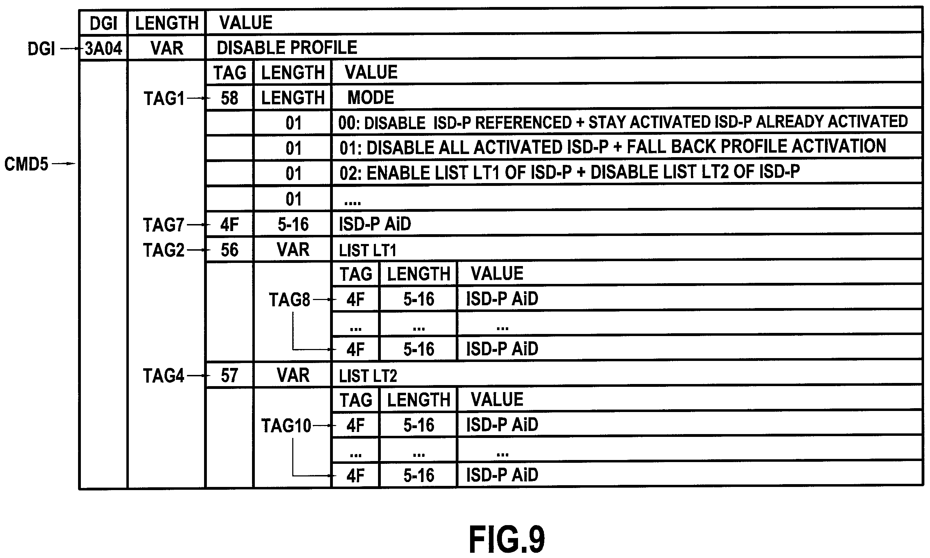

Un mode de réalisation particulier est à présent décrit en référence aux **figures 8** et **9****.** Dans ce mode de réalisation, le serveur de gestion de profil SM-SR est apte à envoyer au terminal, à destination du module eUICC1, une commande CMD4 et/ou CMD5 comprenant :
- un premier paramètre DGI pouvant prendre un premier état (ou valeur) « ENABLE PROFILE » (par exemple 3A03) ou un deuxième état « DISABLE PROFILE » (par exemple 3A04) ; et
- un deuxième paramètre TAG1 (pouvant être représenté, par exemple, par la valeur « 55 » ou « 58 ») identifiant un mode pouvant prendre, par exemple et de façon non limitative, un premier état (ou valeur), à savoir « 00 », un deuxième état « 01 » ou un troisième état « 02 ».

Dans ces exemples de réalisation, les commandes CMD4 et CMD5 sont de type TLV, d'autres formats de commandes pouvant être envisagés dans le cadre de l'invention.

Plus particulièrement, les **figures 8** et **9** représentent respectivement une commande CMD4 et CMD5 pouvant être envoyées au terminal T par le serveur SM-SR, chacune de ces commandes pouvant commander la configuration (actif ou inactif) de l'état d'au moins un profil P dans le module eUICC1 selon un mode de fonctionnement donné.

Dans ce mode de réalisation, le module eUICC1 est configuré pour :
∘ traiter la commande (CMD4) en tant que commande d'activation si le paramètre DGI est dans le premier état ENABLE PROFILE et que le paramètre TAG1 est dans le premier ou deuxième état (00, 01) ;
∘ traiter la commande (CMD5) en tant que commande de désactivation si le paramètre DGI est dans le deuxième état DISABLE PROFILE et que le paramètre TAG1 est dans le premier ou deuxième état (00, 01) ; et
∘ traiter les commandes (CMD4 et CMD5) en tant que commande hybride d'activation et de désactivation si :
   ▪ le paramètre DGI est dans le premier état « ENABLE VALUE » et le paramètre TAG1 est dans le troisième état 02 ; et si
   ▪ le paramètre DGI est dans le deuxième état « DISABLE VALUE » et le paramètre TAG1 est dans le troisième état 02.

Comme illustré en **figure 8****,** la commande CMD4 comprend le paramètre DGI à l'état ENABLE PROFILE indiquant que la commande CMD4 doit être traitée en tant que commande d'activation (ou hybride) et le paramètre TAG1 indiquant le mode de fonctionnement selon lequel doit être traitée cette commande CMD4 par le module eUICC1.

En réponse à la commande CMD4, le module eUICC1 est configuré pour :
- traiter la commande CMD4 en tant que commande d'activation selon le premier mode MD1 décrit ci-avant en référence à la **figure 4** si le paramètre TAG1 est à la valeur 00 ;
- traiter la commande CMD4 en tant que commande d'activation selon le deuxième mode MD2 décrit ci-avant en référence à la **figure 4** si le paramètre TAG1 est à la valeur 01 ; et
- traiter la commande CMD4 en tant que commande hybride selon le cinquième mode MD5 décrit ci-avant en référence aux **figures 6** et **7** si le paramètre TAG1 est à la valeur 02.

Pour ce faire, la commande CMD4 comprend, sous la référence d'un paramètre TAG6 (pouvant être représenté, par exemple, par la valeur « 4F »), l'identifiant AID (« Application Identifier » en terminologie anglaise) du profil P (ou du domaine ISD-P correspondant) à activer lorsque le paramètre TAG1 est à la valeur 00 ou 01.

En outre, la commande CMD4 comprend :
- sous la référence d'un paramètre TAG2 (pouvant être représenté, par exemple par la valeur « 56 »), la liste LT1 d'au moins un identifiant AID d'un profil P (ou du domaine ISD-P correspondant) à activer lorsque le paramètre TAG1 est à la valeur 02. Par exemple, chaque identifiant AID listé est référencé sous un paramètre TAG8 (pouvant être représenté, par exemple, par la valeur « 4F ») et dont la valeur représente la valeur de l'identifiant AID du profil P (ou du domaine ISD-P correspondant).
- sous la référence d'un paramètre TAG4 (pouvant être représenté, par exemple par la valeur « 57 »), la liste LT2 d'au moins un identifiant AID d'un profil P (ou du domaine ISD-P correspondant) à désactiver lorsque le paramètre TAG1 est à la valeur 02. Par exemple, chaque identifiant AID listé est référencé sous un paramètre TAG10 (pouvant être représenté, par exemple, par la valeur « 4F ») et dont la valeur représente la valeur de l'identifiant AID du profil P (ou du domaine ISD-P correspondant).

Dans un cas particulier, l'une parmi les liste LT1 et LT2 est vide, et la liste non vide parmi LT1 et LT2 comporte au moins deux identifiants de profil P.

Comme illustré en **figure 9****,** la commande CMD5 comprend le paramètre DGI à l'état DISABLE PROFILE indiquant que la commande CMD5 doit être traitée en tant que commande de désactivation (ou hybride) et le paramètre TAG1 indiquant le mode de fonctionnement selon lequel doit être traitée cette commande CMD5 par le module eUICC1.

En réponse à la commande CMD5, le module eUICC1 est configuré pour :
- traiter la commande CMD5 en tant que commande de désactivation selon le troisième mode MD3 décrit ci-avant en référence à la **figure 5** si le paramètre TAG1 est à la valeur 00 ;
- traiter la commande CMD5 en tant que commande de désactivation selon le quatrième mode MD4 décrit ci-avant en référence à la **figure 5** si le paramètre TAG1 est à la valeur 01 ; et
- traiter la commande CMD5 en tant que commande hybride selon le cinquième mode MD5 décrit ci-avant en référence aux **figures 6** et **7** si le paramètre TAG1 est à la valeur 02.

Pour ce faire, la commande CMD5 comprend, sous la référence d'un paramètre TAG7 (pouvant être représenté, par exemple, par la valeur « 4F »), l'identifiant AID du profil P (ou du domaine ISD-P correspondant) à désactiver lorsque le paramètre TAG1 est à la valeur 00 ou 01.

En outre, la commande CMD5 comprend :
- sous la référence du paramètre TAG2 (pouvant être représenté, par exemple par la valeur « 59 »), la liste LT1 d'au moins un identifiant AID d'un profil P (ou du domaine ISD-P correspondant) à activer lorsque le paramètre TAG1 est à la valeur 02. Par exemple, chaque identifiant AID listé est référencé sous un paramètre TAG8 (pouvant être représenté, par exemple, par la valeur « 4F ») et dont la valeur représente la valeur de l'identifiant AID du profil P (ou du domaine ISD-P correspondant).
- sous la référence du paramètre TAG4 (pouvant être représenté, par exemple par la valeur « 5A »), la liste LT2 d'au moins un identifiant AID d'un profil P (ou du domaine ISD-P correspondant) à désactiver lorsque le paramètre TAG1 est à la valeur 02. Par exemple, chaque identifiant AID listé est référencé sous un paramètre TAG10 (pouvant être représenté, par exemple, par la valeur « 4F ») et dont la valeur représente la valeur de l'identifiant AID du profil P (ou du domaine ISD-P correspondant).

Dans un cas particulier, l'une parmi les liste LT1 et LT2 est vide, et la liste non vide parmi LT1 et LT2 comporte au moins deux identifiants de profil P.

On comprendra que le mode de réalisation décrit ci-avant en référence aux **figures 8** et **9** constitue un exemple de mise en oeuvre non limitatif de l'invention. Selon une variante, le paramètre TAG1 des commandes CMD4 et CMD5 ne peut prendre que deux parmi les valeurs 00, 01 et 02 (par exemple que les valeurs 00 et 02).

L'invention permet avantageusement d'améliorer la gestion de l'état de profils dans un module eUICC et permet notamment de maintenir plusieurs profils actifs simultanément de sorte qu'il n'est plus nécessaire d'envoyer des requêtes d'activation et/ou de désactivation au module eUICC à chaque fois qu'il est nécessaire d'utiliser un profil différent. Il est ainsi possible de limiter le trafic réseau et les ressources normalement nécessaires à l'envoi et à la gestion des requêtes d'activation et de désactivation de profil.

Un homme du métier comprendra que les modes de réalisation et variantes décrits ci-avant ne constituent que des exemples non limitatifs de mise en œuvre de l'invention. En particulier, l'homme du métier pourra envisager une quelconque adaptation ou combinaison des modes de réalisation et variantes décrits ci-avant afin de répondre à un besoin bien particulier.

## Revendications

1. Module d'identité de souscripteur embarqué (eUICC1) apte à coopérer avec un terminal de communication (T), dans lequel le module d'identité de souscripteur embarqué comprend :
- une pluralité de domaines de sécurité secondaires (ISD-P), chacun étant apte à contenir un profil de communication, chaque profil de communication actif autorisant le terminal de communication à communiquer avec un réseau de téléphonie mobile (R) associé audit profil de communication ;
- un domaine de sécurité privilégié (ISD-R) configuré pour contrôler un état, actif ou inactif, de chaque profil de communication, le domaine de sécurité privilégié étant apte à maintenir simultanément à l'état actif une pluralité de profils de communication (P),
dans lequel ledit domaine de sécurité privilégié (ISD-R) est configuré, sur réception d'une requête d'activation (CMD1) d'un profil de communication ou sur réception d'une requête de désactivation (CMD2) d'un profil de communication, pour maintenir à l'état actif un quelconque autre profil de communication déjà actif dans ledit module d'identité de souscripteur embarqué.

2. Module d'identité de souscripteur embarqué selon la revendication 1, dans lequel le terminal de communication (T) comprend au moins une interface radio (INT), chaque profil de communication (P) actif étant apte, lorsqu'il a accès à ladite au moins une interface radio, à établir une communication entre le terminal de communication et le réseau de téléphonie mobile associé audit profil de communication actif.

3. Module d'identité de souscripteur embarqué selon la revendication 1 ou 2, comprenant :
- un module de réception (M2) apte à recevoir une requête d'activation (CMD1) d'un premier profil de communication (P1) se trouvant à l'état inactif dans le module d'identité de souscripteur embarqué ;
- un module de configuration (M4) apte à configurer le module d'identité de souscripteur embarqué dans un premier mode (MD1) ou dans un deuxième mode (MD2) selon l'état d'un premier paramètre (PR1) inclus dans ladite requête d'activation,
dans lequel, lorsqu'un quelconque deuxième profil de communication (P2) distinct dudit premier profil (P1) est déjà actif à réception de ladite requête d'activation, le module d'identité de souscripteur embarqué est configuré :
∘ dans le premier mode, pour activer le premier profil (P1) de communication tout en maintenant actif ledit deuxième profil (P2) de communication ;
∘ dans le deuxième mode, pour activer le premier profil (P1) de communication et désactiver chaque profil (P2, P3) de communication autre que le premier profil de communication.

4. Module d'identité de souscripteur embarqué selon l'une quelconque des revendications 1 à 3, comprenant :
- un module de réception (M2) apte à recevoir une requête de désactivation (CMD2) d'un premier profil (P1) de communication se trouvant déjà à l'état actif dans le module d'identité de souscripteur embarqué ;
- un module de configuration (M4) apte à configurer le module d'identité de souscripteur embarqué dans un troisième mode (MD3) ou dans un quatrième mode (MD4) selon l'état d'un deuxième paramètre (PR2) inclus dans ladite requête de désactivation,
dans lequel, lorsqu'un quelconque deuxième profil (P2) de communication distinct dudit premier profil (P1) est déjà actif à réception de ladite requête de désactivation, le module d'identité de souscripteur embarqué est configuré :
∘ dans le troisième mode, pour désactiver le premier profil (P1) de communication tout en maintenant actif ledit deuxième profil (P2) de communication;
∘ dans le quatrième mode, pour activer un profil (P3) de communication prédéfini en tant que profil par défaut et pour désactiver chaque profil (P1, P2) de communication autre que ledit profil par défaut.

5. Module d'identité de souscripteur embarqué selon la revendication 4, dans lequel, dans le troisième mode, le module d'identité de souscripteur embarqué est configuré, en réponse à la requête de désactivation (CMD2), pour maintenir actif le deuxième profil (P2) de communication y compris si ledit deuxième profil de communication n'est pas un profil de communication (P3) prédéfini par défaut dans le module d'identité de souscripteur embarqué (eUICC1).

6. Module d'identité de souscripteur embarqué selon l'une quelconque des revendications 1 à 5, dans lequel ladite commande d'activation et/ou ladite commande de désactivation sont des commandes APDU conformes à la norme ISO 7816-4.

7. Module d'identité de souscripteur embarqué selon l'une quelconque des revendications 1 à 6, dans lequel le module d'identité de souscripteur embarqué est apte, selon un cinquième mode (MD5), à recevoir une première requête (CMD3) identifiant au moins deux profils de communication (P1, P2, P3), chacun d'eux étant à activer ou à désactiver dans ledit module d'identité de souscripteur embarqué,
ledit module d'identité de souscripteur embarqué étant apte, selon ledit cinquième mode :
- à configurer à l'état actif chaque profil (P1, P2) de communication identifié comme profil à activer dans ladite première requête ; et
- à configurer à l'état inactif chaque profil (P3) de communication identifié comme profil à désactiver dans ladite première requête.

8. Module d'identité de souscripteur embarqué selon la revendication 7, dans lequel la première requête identifie au moins un premier profil de communication à activer dans le module d'identité de souscripteur embarqué et au moins un deuxième profil de communication à désactiver dans le module d'identité de souscripteur embarqué.

9. Module d'identité de souscripteur embarqué selon la revendication 7 ou 8, dans lequel la première requête identifie uniquement au moins deux premiers profils de communication à activer ou uniquement au moins deux profils de communication à désactiver dans le module d'identité de souscripteur embarqué.

10. Module d'identité de souscripteur embarqué selon la combinaison au moins des revendications 3, 4 et 7, dans lequel la première requête (CMD3) comprend un troisième paramètre (DGI) pouvant prendre un premier état (ENABLE PROFILE) ou un deuxième état (DISABLE PROFILE) et un quatrième paramètre (TAG1) pouvant prendre un premier état (00), un deuxième état (01) ou un troisième état (02),
dans lequel le module d'identité de souscripteur embarqué est configuré pour :
∘ traiter la première requête en tant que commande d'activation lorsque le troisième paramètre (DGI) est dans le premier état et le quatrième paramètre (TAG1) est dans le premier ou deuxième état (00, 01) ;
∘ traiter la première requête en tant que commande de désactivation lorsque le troisième paramètre (DGI) est dans le deuxième état et le quatrième paramètre (TAG1) est dans le premier ou deuxième état (00, 01) ; et
∘ traiter la première requête en tant que commande hybride d'activation et de désactivation lorsque le troisième paramètre (DGI) est dans le premier ou deuxième état, et que le quatrième paramètre (TAG1) est dans le troisième état (02).

11. Module d'identité de souscripteur embarqué selon la revendication 10, dans lequel le module d'identité de souscripteur embarqué est configuré pour traiter la première requête (CMD3) :
∘ selon le premier mode (MD1) si le troisième paramètre (DGI) est dans le premier état et le quatrième paramètre (TAG1) est dans le premier état ;
∘ selon le deuxième mode (MD2) si le troisième paramètre (DGI) est dans le premier état et le quatrième paramètre (TAG1) est dans le deuxième état ;
∘ selon le troisième mode (MD3) si le troisième paramètre (DGI) est dans le deuxième état et le quatrième paramètre (TAG1) est dans le premier état ;
∘ selon le quatrième mode (MD4) si le troisième paramètre (DGI) est dans le deuxième état et le quatrième paramètre (TAG1) est dans le deuxième état ; et
∘ selon le cinquième mode (MD5) si le troisième paramètre (DGI) est dans le premier état et le quatrième paramètre (TAG1) est dans le troisième état, ou si le troisième paramètre (DGI) est dans le deuxième état et le quatrième paramètre (TAG1) est dans le troisième état.

12. Dispositif (SM-SR) apte à communiquer avec un terminal de communication (T) coopérant avec un module d'identité de souscripteur embarqué (eUICC1), le dispositif comprenant :
- un module d'envoi apte à envoyer au module d'identité de souscripteur embarqué une requête d'activation d'un premier profil de communication se trouvant à l'état inactif dans le module d'identité de souscripteur embarqué ou pour envoyer une requête de désactivation d'un premier profil de communication se trouvant déjà à l'état actif dans le module d'identité de souscripteur embarqué ;
- un module d'insertion apte à inclure, avant envoi au module d'identité de souscripteur embarqué, l'un parmi :
∘ un premier paramètre dans la requête d'activation ; et
∘ un deuxième paramètre dans la requête de désactivation,
dans lequel :
- le premier paramètre est dans un état définissant si le module d'identité de souscripteur embarqué doit se configurer dans un premier mode ou dans un deuxième mode lorsqu'un quelconque deuxième profil de communication distinct dudit premier profil est déjà actif dans le module d'identité de souscripteur embarqué à réception de ladite requête d'activation, l'état du premier paramètre commandant au module d'identité de souscripteur embarqué :
∘ dans le premier mode, d'activer le premier profil de communication tout en maintenant actif ledit deuxième profil de communication ;
∘ dans le deuxième mode, d'activer le premier profil de communication et désactiver chaque profil de communication autre que le premier profil de communication.
- le deuxième paramètre est dans un état définissant si le module d'identité de souscripteur embarqué doit se configurer dans un troisième mode ou dans un quatrième mode lorsqu'un quelconque deuxième profil de communication distinct dudit premier profil est déjà actif à réception de ladite requête de désactivation, l'état du deuxième paramètre commandant au module d'identité de souscripteur embarqué :
∘ dans le troisième mode, de désactiver le premier profil de communication tout en maintenant actif ledit deuxième profil de communication ;
∘ dans le quatrième mode, d'activer un profil de communication prédéfini en tant que profil par défaut et désactiver chaque profil de communication autre que ledit profil par défaut.

13. Système (SY) comprenant :
- un module d'identité de souscripteur embarqué (eUICC1) selon l'une quelconque des revendications 1 à 11 ;
- un terminal de communication (T) coopérant avec le module d'identité de souscripteur embarqué ; et
- au moins un dispositif (SM-SR) selon la revendication 12.

14. Procédé de contrôle mis en œuvre par un module d'identité de souscripteur embarqué (eUICC1) apte à coopérer avec un terminal de communication (T),
le module d'identité de souscripteur embarqué comprenant :
- une pluralité de domaines de sécurité secondaires (ISD-P), chacun étant apte à contenir un profil de communication ; et
- un domaine de sécurité privilégié (ISD-R) configuré pour contrôler un état, actif ou inactif, de chaque profil de communication ;
ledit procédé comprenant une étape de maintien à l'état actif, simultanément, d'une pluralité de profils de communication (P), chaque profil de communication actif autorisant le terminal de communication à communiquer avec un réseau de téléphonie (R) mobile associé audit profil de communication,
le procédé comprenant, sur réception d'une requête d'activation (CMD1) d'un profil de communication ou sur réception d'une requête de désactivation (CMD2) d'un profil de communication, le maintien à l'état actif par ledit domaine de sécurité privilégié (ISD-R) d'un quelconque autre profil de communication déjà actif dans ledit module d'identité de souscripteur embarqué.

## Patentansprüche

1. Mitgeführtes Teilnehmeridentitätsmodul (eUICC1), das dazu geeignet ist, mit einem Kommunikationsendgerät (T) zusammenzuwirken, wobei das mitgeführte Teilnehmeridentitätsmodul umfasst:
- mehrere sekundäre Sicherheitsdomänen (ISD-P), die jeweils dazu geeignet sind, ein Kommunikationsprofil zu enthalten, wobei jedes aktive Kommunikationsprofil das Kommunikationsendgerät dazu autorisiert, mit einem Mobilfunknetz (R), das dem Kommunikationsprofil zugeordnet ist, zu kommunizieren,
- eine privilegierte Sicherheitsdomäne (ISD-R), die dazu ausgestaltet ist, einen aktiven oder inaktiven Zustand eines jeden Kommunikationsprofils zu steuern, wobei die privilegierte Sicherheitsdomäne dazu geeignet ist, gleichzeitig mehrere Kommunikationsprofile (P) in dem aktiven Zustand zu halten,
wobei die privilegierte Sicherheitsdomäne (ISD-R) dazu ausgestaltet ist, bei Empfang einer Anfrage zur Aktivierung (CMD1) eines Kommunikationsprofils oder bei Empfang einer Anfrage zur Deaktivierung (CMD2) eines Kommunikationsprofils ein beliebiges anderes bereits aktives Kommunikationsprofil in dem mitgeführten Teilnehmeridentitätsmodul in dem aktiven Zustand zu halten.

2. Mitgeführtes Teilnehmeridentitätsmodul nach Anspruch 1, wobei das Kommunikationsendgerät (T) zumindest eine Funkschnittstelle (INT) umfasst, wobei jedes aktive Kommunikationsprofil (P) dazu geeignet ist, wenn es Zugriff auf die zumindest eine Funkschnittstelle hat, eine Kommunikation zwischen dem Kommunikationsendgerät und dem Mobilfunknetz, das dem aktiven Kommunikationsprofil zugeordnet ist, herzustellen.

3. Mitgeführtes Teilnehmeridentitätsmodul nach Anspruch 1 oder 2, umfassend:
- ein Empfangsmodul (M2), das dazu geeignet ist, eine Anfrage zur Aktivierung (CMD1) eines ersten Kommunikationsprofils (P1), das sich in dem mitgeführten Teilnehmeridentitätsmodul in dem inaktiven Zustand befindet, zu empfangen,
- ein Konfigurationsmodul (M4), das dazu geeignet ist, das mitgeführte Teilnehmeridentitätsmodul gemäß dem Zustand eines ersten Parameters (PR1), der in der Aktivierungsanfrage enthalten ist, in einem ersten Modus (MD1) oder in einem zweiten Modus (MD2) zu konfigurieren,
wobei, wenn ein beliebiges zweites Kommunikationsprofil (P2), das sich von dem ersten Profil (P1) unterscheidet, bei Empfang der Aktivierungsanfrage bereits aktiv ist, das mitgeführte Teilnehmeridentitätsmodul dazu konfiguriert ist:
∘ in dem ersten Modus das erste Kommunikationsprofil (P1) zu aktivieren, während das zweite Kommunikationsprofil (P2) aktiv gehalten wird,
∘ in dem zweiten Modus das erste Kommunikationsprofil (P1) zu aktivieren und jedes andere Kommunikationsprofil (P2, P3) als das erste Kommunikationsprofil zu deaktivieren.

4. Mitgeführtes Teilnehmeridentitätsmodul nach einem der Ansprüche 1 bis 3, umfassend:
- ein Empfangsmodul (M2), das dazu geeignet ist, eine Anfrage zur Deaktivierung (CMD2) eines ersten Kommunikationsprofils (P1), das sich in dem mitgeführten Teilnehmeridentitätsmodul bereits in dem aktiven Zustand befindet, zu empfangen,
- ein Konfigurationsmodul (M4), das dazu geeignet ist, das mitgeführte Teilnehmeridentitätsmodul gemäß dem Zustand eines zweiten Parameters (PR2), der in der Deaktivierungsanfrage enthalten ist, in einem dritten Modus (MD3) oder in einem vierten Modus (MD4) zu konfigurieren,
wobei, wenn ein beliebiges zweites Kommunikationsprofil (P2), das sich von dem ersten Profil (P1) unterscheidet, bei Empfang der Deaktivierungsanfrage bereits aktiv ist, das mitgeführte Teilnehmeridentitätsmodul dazu konfiguriert ist:
∘ in dem dritten Modus das erste Kommunikationsprofil (P1) zu deaktivieren, während das zweite Kommunikationsprofil (P2) aktiv gehalten wird,
∘ in dem vierten Modus ein als Standardprofil vordefiniertes Kommunikationsprofil (P3) zu aktivieren und jedes andere Kommunikationsprofil (P1, P2) als das Standardprofil zu deaktivieren.

5. Mitgeführtes Teilnehmeridentitätsmodul nach Anspruch 4, wobei das mitgeführte Teilnehmeridentitätsmodul in dem dritten Modus dazu konfiguriert ist, in Ansprechen auf die Deaktivierungsanfrage (CMD2) das zweite Kommunikationsprofil (P2) aktiv zu halten, auch dann, wenn das zweite Kommunikationsprofil kein in dem mitgeführten Teilnehmeridentitätsmodul (eUICC1) als Standard vordefiniertes Kommunikationsprofil (P3) ist.

6. Mitgeführtes Teilnehmeridentitätsmodul nach einem der Ansprüche 1 bis 5, wobei der Aktivierungsbefehl und/oder der Deaktivierungsbefehl APDU-Befehle entsprechend der Norm ISO 7816-4 sind.

7. Mitgeführtes Teilnehmeridentitätsmodul nach einem der Ansprüche 1 bis 6, wobei das mitgeführte Teilnehmeridentitätsmodul dazu geeignet ist, gemäß einem fünften Modus (MD5) eine erste Anfrage (CMD3) zu empfangen, die zumindest zwei Kommunikationsprofile (P1, P2, P3) identifiziert, wobei jedes von diesen in dem mitgeführten Teilnehmeridentitätsmodul zu aktivieren oder deaktivieren ist,
wobei das mitgeführte Teilnehmeridentitätsmodul dazu geeignet ist, gemäß dem fünften Modus:
- jedes Kommunikationsprofil (P1, P2), das in der ersten Anfrage als zu aktivierendes Profil identifiziert ist, in den aktiven Zustand zu konfigurieren, und
- jedes Kommunikationsprofil (P3), das in der ersten Anfrage als zu deaktivierendes Profil identifiziert ist, in den inaktiven Zustand zu konfigurieren.

8. Mitgeführtes Teilnehmeridentitätsmodul nach Anspruch 7, wobei die erste Anfrage zumindest ein erstes Kommunikationsprofil, das in dem mitgeführten Teilnehmeridentitätsmodul zu aktivieren ist, und zumindest ein zweites Kommunikationsprofil identifiziert, das in dem mitgeführten Teilnehmeridentitätsmodul zu deaktivieren ist.

9. Mitgeführtes Teilnehmeridentitätsmodul nach Anspruch 7 oder 8, wobei die erste Anfrage ausschließlich zumindest zwei erste zu aktivierende Kommunikationsprofile oder ausschließlich zumindest zwei Kommunikationsprofile identifiziert, die in dem mitgeführten Teilnehmeridentitätsmodul zu deaktivieren sind.

10. Mitgeführtes Teilnehmeridentitätsmodul nach der Kombination zumindest der Ansprüche 3, 4 und 7, wobei die erste Anfrage (CMD3) einen dritten Parameter (DGI), der einen ersten Zustand (ENABLE PROFILE) oder einen zweiten Zustand (DISABLE PROFILE) annehmen kann, und einen vierten Parameter (TAG1) umfasst, der einen ersten Zustand (00), einen zweiten Zustand (01) oder einen dritten Zustand (02) annehmen kann,
wobei das mitgeführte Teilnehmeridentitätsmodul dazu konfiguriert ist:
∘ die erste Anfrage als Aktivierungsbefehl zu behandeln, wenn der dritte Parameter (DGI) in dem ersten Zustand ist und der vierte Parameter (TAG1) in dem ersten oder zweiten Zustand (00, 01) ist,
∘ die erste Anfrage als Deaktivierungsbefehl zu behandeln, wenn der dritte Parameter (DGI) in dem zweiten Zustand ist und der vierte Parameter (TAG1) in dem ersten oder zweiten Zustand (00, 01) ist, und
∘ die erste Anfrage als hybriden Aktivierungs- und Deaktivierungsbefehl zu behandeln, wenn der dritte Parameter (DGI) in dem ersten oder zweiten Zustand ist, und der vierte Parameter (TAG1) in dem dritten Zustand (02) ist.

11. Mitgeführtes Teilnehmeridentitätsmodul nach Anspruch 10, wobei das mitgeführte Teilnehmeridentitätsmodul dazu konfiguriert ist, die erste Anfrage (CMD3) zu behandeln:
∘ gemäß dem ersten Modus (MD1), wenn der dritte Parameter (DGI) in dem ersten Zustand ist und der vierte Parameter (TAG1) in dem ersten Zustand ist,
∘ gemäß dem zweiten Modus (MD2), wenn der dritte Parameter (DGI) in dem ersten Zustand ist und der vierte Parameter (TAG1) in dem zweiten Zustand ist,
∘ gemäß dem dritten Modus (MD3), wenn der dritte Parameter (DGI) in dem zweiten Zustand ist und der vierte Parameter (TAG1) in dem ersten Zustand ist,
∘ gemäß dem vierten Modus (MD4), wenn der dritte Parameter (DGI) in dem zweiten Zustand ist und der vierte Parameter (TAG1) in dem zweiten Zustand ist, und
∘ gemäß dem fünften Modus (MD5), wenn der dritte Parameter (DGI) in dem ersten Zustand ist und der vierte Parameter (TAG1) in dem dritten Zustand ist, oder wenn der dritte Parameter (DGI) in dem zweiten Zustand ist und der vierte Parameter (TAG1) in dem dritten Zustand ist.

12. Vorrichtung (SM-SR), die dazu geeignet ist, mit einem Kommunikationsendgerät (T) zu kommunizieren, das mit einem mitgeführten Teilnehmeridentitätsmodul (eUICC1) zusammenwirkt, wobei die Vorrichtung umfasst:
- ein Sendemodul, das dazu geeignet ist, an das mitgeführte Teilnehmeridentitätsmodul eine Anfrage zur Aktivierung eines ersten Kommunikationsprofils zu senden, das sich in dem mitgeführten Teilnehmeridentitätsmodul in dem inaktiven Zustand befindet, oder eine Anfrage zur Deaktivierung eines ersten Kommunikationsprofils zu senden, das sich in dem mitgeführten Teilnehmeridentitätsmodul bereits in dem aktiven Zustand befindet,
- ein Einfügemodul, das dazu geeignet ist, vor dem Senden an das mitgeführte Teilnehmeridentitätsmodul eines von:
∘ einem ersten Parameter in die Aktivierungsanfrage, und
∘ einem zweiten Parameter in die Deaktivierungsanfrage, einzufügen,
wobei:
- der erste Parameter in einem Zustand ist, der definiert, ob das mitgeführte Teilnehmeridentitätsmodul in einem ersten Modus oder in einem zweiten Modus konfiguriert werden soll, wenn ein beliebiges zweites Kommunikationsprofil, das sich von dem ersten Profil unterscheidet, in dem mitgeführten Teilnehmeridentitätsmodul bei Empfang der Aktivierungsanfrage bereits aktiv ist, wobei der Zustand des ersten Parameters das mitgeführte Teilnehmeridentitätsmodul anweist:
∘ in dem ersten Modus das erste Kommunikationsprofil zu aktivieren, während das zweite Kommunikationsprofil aktiv gehalten wird,
∘ in dem zweiten Modus das erste Kommunikationsprofil zu aktivieren und jedes andere Kommunikationsprofil als das erste Kommunikationsprofil zu deaktivieren.
- der zweite Parameter in einem Zustand ist, der definiert, ob das mitgeführte Teilnehmeridentitätsmodul in einem dritten Modus oder in einem vierten Modus konfiguriert werden soll, wenn ein beliebiges zweites Kommunikationsprofil, das sich von dem ersten Profil unterscheidet, bei Empfang der Deaktivierungsanfrage bereits aktiv ist, wobei der Zustand des zweiten Parameters das mitgeführte Teilnehmeridentitätsmodul anweist:
∘ in dem dritten Modus das erste Kommunikationsprofil zu deaktivieren, während das zweite Kommunikationsprofil aktiv gehalten wird,
∘ in dem vierten Modus ein als Standardprofil vordefiniertes Kommunikationsprofil zu aktivieren und jedes andere Kommunikationsprofil als das Standardprofil zu deaktivieren.

13. System (SY), umfassend:
- ein mitgeführtes Teilnehmeridentitätsmodul (eUICC1) nach einem der Ansprüche 1 bis 11,
- ein Kommunikationsendgerät (T), das mit dem mitgeführten Teilnehmeridentitätsmodul zusammenwirkt, und
- zumindest eine Vorrichtung (SM-SR) nach Anspruch 12.

14. Verfahren zur Steuerung, das durch ein mitgeführtes Teilnehmeridentitätsmodul (eUICC1) umgesetzt wird, welches dazu geeignet ist, mit einem Kommunikationsendgerät (T) zusammenzuwirken,
wobei das mitgeführte Teilnehmeridentitätsmodul umfasst:
- mehrere sekundäre Sicherheitsdomänen (ISD-P), die jeweils dazu geeignet sind, ein Kommunikationsprofil zu enthalten, und
- eine privilegierte Sicherheitsdomäne (ISD-R), die dazu ausgestaltet ist, einen aktiven oder inaktiven Zustand eines jeden Kommunikationsprofils zu steuern,
wobei das Verfahren einen Schritt zum gleichzeitigen Halten von mehreren Kommunikationsprofilen (P) in dem aktiven Zustand umfasst, wobei jedes aktive Kommunikationsprofil das Kommunikationsendgerät dazu autorisiert, mit einem Mobilfunknetz (R), das dem Kommunikationsprofil zugeordnet ist, zu kommunizieren,
wobei das Verfahren bei Empfang einer Anfrage zur Aktivierung (CMD1) eines Kommunikationsprofils oder bei Empfang einer Anfrage zur Deaktivierung (CMD2) eines Kommunikationsprofils das Halten eines beliebigen anderen Kommunikationsprofils, das in dem mitgeführten Teilnehmeridentitätsmodul bereits aktiv ist, in dem aktiven Zustand durch die privilegierte Sicherheitsdomäne (ISD-R) umfasst.

## Claims

1. An embedded subscriber identity module (eUICC1) suitable for co-operating with a communications terminal (T), wherein the embedded subscriber identity module comprises:
- a plurality of secondary secure domains (ISD-P), each being suitable for containing a communication profile, each active communication profile allowing the communications terminal to communicate with a mobile telephone network (R) associated with said communication profile;
- a privileged secure domain (ISD-R) configured to control an active or inactive state of each communication profile, the privileged secure domain being suitable for maintaining a plurality of communication profiles (P) simultaneously in the active state,
- wherein said privileged secure domain (ISD-R) is configured, on receiving an activation request (CMD1) to activate a communication profile or on receiving a deactivation request (CMD2) to deactivate a communication profile, to maintain in the active state any other communication profile that is already active in said embedded subscriber identity module.

2. An embedded subscriber identity module according to claim 1, wherein the communications terminal (T) includes at least one radio interface (INT), each active communication profile (P) being suitable, when it has access to said at least one radio interface, for setting up communication between the communications terminal and the mobile telephone network associated with said active communication profile.

3. An embedded subscriber identity module according to claim 1 or claim 2, including:
- a receive module (M2) suitable for receiving an activation request (CMD1) for activating a first communication profile (P1) in the inactive state in the embedded subscriber identity module;
- a configuration module (M4) suitable for configuring the embedded subscriber identity module in a first mode (MD1) or in a second mode (MD2) depending on the state of a first parameter (PR1) included in said activation request,
wherein, when any second communication profile (P2) distinct from said first profile (P1) is already active on receiving said activation request, the embedded subscriber identity module is configured:
∘ in the first mode, to activate the first communication profile (P1) while maintaining said second communication profile (P2) in the active state; and
∘ in the second mode, to activate the first communication profile (P1) and to deactivate each communication profile (P2, P3) other than the first communication profile.

4. An embedded subscriber identity module according to any one of claims 1 to 3, including:
- a receive module (M2) suitable for receiving a deactivation request (CMD2) for deactivating a first communication profile (P1) that is already in the active state in the embedded subscriber identity module; and
- a configuration module (M4) suitable for configuring the embedded subscriber identity module in a third mode (MD3) or in a fourth mode (MD4) depending on the state of a second parameter (PR2) included in said deactivation request;
wherein, when any second communication profile (P2) distinct from said first profile (P1) is already active on receiving said deactivation request, the embedded subscriber identity module is configured:
∘ in the third mode, to deactivate the first communication profile (P1) while maintaining the second communication profile (P2) active; and
∘ in the fourth mode, to activate a communication profile (P3) predefined as a profile by default and to deactivate each communication profile (P1, P2) other than said profile by default.

5. An embedded subscriber identity module according to claim 4, wherein, in the third mode, the embedded subscriber identity module is configured, in response to the deactivation request (CMD2), to maintain in the active state the second communication profile (P2) including when said second communication profile is not a communication profile (P3) defined by default in the embedded subscriber identity module (eUICC1).

6. An embedded subscriber identity module according to any one of claims 1 to 5, wherein said activation command and/or said deactivation command are APDU commands in compliance with the standard ISO 7816-4.

7. An embedded subscriber identity module according to any one of claims 1 to 6, wherein the embedded subscriber identity module is suitable, in a fifth mode (MD5) for receiving a first request (CMD3) identifying at least two communication profiles (P1, P2, P3) each of them being for activating or for deactivating in said embedded subscriber identity module;
said embedded subscriber identity module being suitable, in said fifth mode:
- for configuring to the active state each communication profile (P1, P2) identified as a profile for activating in said first request; and
- for configuring to the inactive state each communication profile (P3) identified as a profile for deactivating in said first request.

8. An embedded subscriber identity module according to claim 7, wherein the first request identifies at least one first communication profile for activating in the embedded subscriber identity module and at least one second communication profile for deactivating in the embedded subscriber identity module.

9. An embedded subscriber identity module according to claim 7 or claim 8, wherein the first request identifies solely at least two first communication profiles for activating or solely at least two communication profiles for deactivating in the embedded subscriber identity module.

10. An embedded subscriber identity module according to at least claims 3, 4, and 7 in combination, wherein the first request (CMD3) includes a third parameter (DGI) capable of taking a first state (ENABLE PROFILE) or a second state (DISABLE PROFILE), and a fourth parameter (TAG1) capable of taking a first state (00), a second state (01), or a third state (02);
wherein the embedded subscriber identity module is configured:
∘ to process the first request as an activation command when the third parameter (DGI) is in the first state and the fourth parameter (TAG1) is in the first or second state (00, 01);
∘ to process the first request as a deactivation command when the third parameter (DGI) is in the second state and the fourth parameter (TAG1) is in the first or second state (00, 01); and
∘ to process the first request as a hybrid activation and deactivation command when the third parameter (DGI) is in the first or second state and the fourth parameter (TAG1) is in the third state (02).

11. An embedded subscriber identity module according to claim 10, wherein the embedded subscriber identity module is configured to process the first request (CMD3):
∘ in the first mode (MD1) if the third parameter (DGI) is in the first state and the fourth parameter (TAG1) is in the first state;
∘ in the second mode (MD2) if the third parameter (DGI) is in the first state and the fourth parameter (TAG1) is in the second state;
∘ in the third mode (MD3) if the third parameter (DGI) is in the second state and the fourth parameter (TAG1) is in the first state;
∘ in the fourth mode (MD4) if the third parameter (DGI) is in the second state and the fourth parameter (TAG1) is in the second state; and
∘ in the fifth mode (MD5) if the third parameter (DGI) is in the first state and the fourth parameter (TAG1) is in the third state, or if the third parameter (DGI) is in the second state and the fourth parameter (TAG1) is in the third state.

12. A device (SM-SR) suitable for communicating with a communications terminal (T) co-operating with an embedded subscriber identity module (eUICC1), the device comprising:
- a send module suitable for sending to the embedded subscriber identity module an activation request for activating a first communication profile that is in the inactive state in the embedded subscriber identity module or for sending a deactivation request for deactivating a first communication profile that is already in the active state in the embedded subscriber identity module;
- an insertion module suitable for including, prior to sending to the embedded subscriber identity module, one of the following:
∘ a first parameter in the activation request; and
∘ a second parameter in the deactivation request;
wherein:
- the first parameter is in a state defining whether the embedded subscriber identity module is to configure itself in a first mode or in a second mode when any second communication profile distinct from said first profile is already active in the embedded subscriber identity module on receiving said activation request, the state of the first parameter concerning the embedded subscriber identity module:
∘ in the first mode, to activate the first communication profile while maintaining said second communication profile active;
∘ in the second mode, to activate the first communication profile and to deactivate each communication profile other than the first communication profile.
- the second parameter is in a state defining whether the embedded subscriber identity module is to configure itself in a third mode or in a fourth mode when any second communication profile distinct from said first profile is already active on receiving said deactivation request, the state of the second parameter concerning the embedded subscriber identity module:
∘ in the third mode, to activate the first communication profile while maintaining said second communication profile active;
∘ in the fourth mode, to activate a communication profile predefined as profile by default and to deactivate each communication profile other than said profile by default.

13. A system (SY) comprising:
- an embedded subscriber identity module (eUICC1) according to any one of claims 1 to 11;
- a communications terminal (T) co-operating with the embedded subscriber identity module; and
- at least one device (SM-SR) according to claim 12.

14. A control method performed by an embedded subscriber identity module (eUICC1) suitable for co-operating with a communications terminal (T),
the embedded subscriber identity module comprising:
- a plurality of secondary secure domains (ISD-P), each being suitable for containing a communication profile; and
- a privileged secure domain (ISD-R) configured to control an active or inactive state of each communication profile;
said method comprising a step of maintaining a plurality of communication profiles (P) simultaneously in the active state, each active communication profile authorizing the communications terminal to communicate with a mobile telephone network (R) associated with said communication profile,
the method comprising, on receiving an activation request (CMD1) for activating a communication profile or on receiving a deactivation request (CMD2) for deactivating a communication profile, maintaining in the active state, by said privileged secure domain (ISD-R), any one other communication profile that is already active in said embedded subscriber identity module.
